# EUROPÄISCHE PATENTSCHRIFT

(11) **EP 1 419 683 B1**
(45) Veröffentlichungstag und Bekanntmachung des Hinweises auf die Patenterteilung: **17.01.2007**
(21) Anmeldenummer: 03023002.3
(22) Anmeldetag: 11.10.2003
(51) Int. Cl.: A01B 79/00

(54) **Verfahren zur Steuerung eines landwirtschaftlichen Nutzfahrzeuges**
Method of controlling an agricultural vehicle
Methode de commande d'un vehicule agricole

(30) Priorität: 31.10.2002 DE 10250694
(43) Veröffentlichungstag der Anmeldung: 19.05.2004
(73) Patentinhaber: CNH Österreich GmbH, 4300 St. Valentin (AT)
(72) Erfinder: Hrazdera, Oliver, Dipl.-Ing, 4501 Neuhofen an der Krems (AT); Huber, Karl, Dipl.-Ing., 4111 Walding (AT)
(74) Vertreter: Feldkamp, Rainer

(56) Entgegenhaltungen:
- EP-A- 0 821 296
- DE-A- 19 710 082
- DE-A- 19 921 996
- US-A- 5 924 371
- US-A1- 2001 001 844
- US-B1- 6 236 924

## Beschreibung

Die Erfindung betrifft ein Verfahren zur Steuerung eines landwirtschaftlichen Nutzfahrzeuges, insbesondere der Fahrstrecke und der Fahrweise auf nichtöffentlichen landwirtschaftlich genutzten Flächen gemäß dem Oberbegriff des Anspruches 1.

Landwirtschaftliche Nutzfahrzeuge mit Fahrmanagements und/oder Feldendemanagements sind bekannt und übernehmen mehr und mehr einzelne Steuerungsaufgaben in Fahrzeugen. Diese Feldendemanagements (kurz HTS) basieren darauf, einen bestimmten am Feldende immer wiederkehrenden Betätigungsablauf einmal, z. B. in einen Festwertspeicher, abzuspeichern und dann jeweils am Feldende diese abgespeicherten Daten durch einzelne Schalterbetätigungen wieder erneut ablaufen zu lassen.
Wie die Daten im einzelnen erfasst und abgespeichert werden gibt es verschiedene am Markt befindliche Systeme. Das erfolgt z. B. entweder durch Anwahl jeder der gewünschten Funktionen der Reihe nach über einen Bildschirm oder durch eine Betätigung einer Start- Programmiertaste vor Durchführung des gewünschten Ablaufes vom Fahrer und anschließender Speichertastenbestätigung bei korrektem Verlauf der Aktion.
Auch für den Aufruf der gespeicherten Information am Feldende gibt es mehrere am Markt befindliche Lösungen. In einer Ausführungsform wird jede einzelne der abgespeicherten Funktionen mittels einer ergonomisch angeordneten Taste quittiert bevor sie ausgeführt wird. Der Vorteil bei dieser Lösung besteht darin, dass der Fahrer die Möglichkeit hat genau zu bestimmen, wo und wann und ob eine Teilaktion oder Teilfunktion der abgespeicherten Gesamtfunktion gestartet wird. Der Nachteil dabei ist, dass der Fahrer ständig eine oder mehrere Tasten drücken muss und seine Aufmerksamkeit ständig darauf richten muss, wo und wann er die jeweilige Funktion aufruft, um eine entsprechende Aktion automatisch zum richtigen Zeitpunkt am richtigen Ort, wie z. B: das Wenden des landwirtschaftlichen Nutzfahrzeuges am Feldende, gewährleisten zu können.
In einer anderen Ausführungsform erfolgt der Ablauf aller gespeicherten Aktionen oder Funktionen in einem Zug nacheinander, nachdem einmal eine Auslösetaste betätigt wurde. Auch hier gibt es wieder 2 Varianten. Bei einer erfolgt der Ablauf der einzelnen Funktionen zeitlich genau gleich, wie er zuerst gespeichert wurde. In einer anderen Variante erfolgt die Steuerung entsprechend dem abgespeicherten Weg, der bei der Speicherung zwischen den einzelnen Aktionen lag. Vorteil ist bei beiden Versionen die geringe Betätigungsnotwendigkeit des Fahrers. Nachteilig ist hierbei allerdings die geringe Sicherheit und die Schwierigkeit des Fahrers zu entscheiden, wann er die Abarbeitung der gespeicherten Tasks starten muss, um entsprechend am Feldende einen z. B. dem Wenden entsprechenden Ablauf der einzelnen Aktionen gewährleisten zu können. (Z. B. dass das Hubwerk sicher in der Höhe ist, bevor das Feldende wirklich erreicht ist, aber natürlich auch nicht zu früh, da sonst Teile des Feldes nicht bearbeitet werden würden.)
Am Markt sind auch erste Lösungen von automatisch gelenkten Fahrzeugen bekannt. Diese landwirtschaftlichen Nutzfahrzeuge werden mittels GPS Ortung über die Felder gesteuert. Automatische Fahrmanagements sind allerdings nur entlang oder auf bestimmten Fahrgassen möglich. Automatisch arbeitende Feldendemanagements mit integriertem Wendevorgang sind mit den beschriebenen Lösungen aber nicht möglich.
Aus der DE 196 29 618 A1 ist ein sehr umfangreiches Routenplanungssystem für landwirtschaftliche Arbeitsfahrzeuge mit einer definierten Arbeitsbreite bekannt, bei dem zur Generierung von Bearbeitungsfahrweg- Verläufen auf einem Feld eine elektronische Datenverarbeitungseinrichtung (EDV- Anlage/Computer; ein sogenannter Hofrechner) eingesetzt wird, in die sowohl einzelne oder mehrere feldspezifische Daten, insbesondere Koordinaten für die Feldumrandung als auch ein oder mehrere arbeitsfahrzeugspezifische Daten, wie beispielsweise die Arbeitsbreite oder sonstige fahrzeugspezifische Daten, eingebbar sind. Aufgrund der feldspezifischen und arbeitsfahrzeugspezifischen Daten in der elektronischen Datenverarbeitungseinrichtung wird anhand von einem Berechnungsalgorithmus, der wenigstens ein Optimierungskriterium zur gewünschten Bearbeitungsroute aufweist, der Bearbeitungsfahrweg- Verlauf in Form einer digitalisierten Bearbeitungsroute generiert. Ein einfacher Abgleich der Daten erfolgt während des Betriebes mit den tatsächlichen Fahrtwerten in einer elektronischen Auswerteeinheit auf dem Arbeitsfahrzeug. Eine Einkopplung der Istwerte in die ursprüngliche Routenplanung erfolgt nicht. Vorher bekannte Hindernisse werden in das System mit eingegeben und bei der Routenplanung berücksichtigt. Die Arbeitslinie, d. h. die Erntegutkante, wird mittels geeigneter Vorrichtungen überwacht und bei der Spurführung und Steuerung des landwirtschaftlichen Arbeitsgerätes vor Ort berücksichtigt.
Aus der DE 197 10 082 A1 ist ein Antriebssystem für Nutzfahrzeuge, insbesondere für landwirtschaftliche oder industrielle Schlepper, mit einem durch einen Verbrennungsmotor angetriebenen elektrischen Generator und einem als Antrieb fungierenden und vom Generator gespeisten Elektromotor mit wenigstens einer Lenkachse bekannt, bei dem deren Räder gemeinsam oder einzeln durch Lenkaktuatoren gelenkt werden. Weiterhin sind manuelle Bedienelemente für wenigstens die Fahrfunktionen Lenkung und Geschwindigkeitsvorgabe angeordnet, deren Signale in einem Prozessrechner mit automatisch ermittelten Signalen abgeglichen werden, wobei weitere Signale weiterer Bauteile oder sonstiger Bedienelemente oder Geschwindigkeitsvorgaben ausgewertet und verglichen werden und wobei das Echtzeitverhalten und die Steuerung optimiert wird. Dabei werden mittels des Prozessrechners automatisch parallele und autark arbeitende Funktions- Module angesteuert und die zugehörigen Aktuatorsysteme bedient. Nachteilig ist hierbei, dass dabei kein automatisiertes Fahrmanagement oder Feldendemanagement ausführbar ist. Aus der technischen Lösung gemäß DE 197 42 463 A1 ist ein Verfahren zur computergestützten Kartierung georeferenzierter Messgrößen, insbesondere landwirtschaftlicher Ertragsgrößen, die in einem Schlag, insbesondere entlang von Fahrspuren mit einer Erhebungsvorrichtung ermittelt werden, bekannt. Dabei wird eine möglichst gute Annäherung der Messpunkte an den Schlaggrenzenverlauf erzielt. Der Schlag wird dabei computergestützt kartiert.

Aus der DE 198 30 858 A1 ist eine Vorrichtung und ein Verfahren zur Bestimmung einer virtuellen Position eines landwirtschaftlichen Fahrzeugs oder Arbeitsgeräts mit einer Satelliten- Empfangseinheit (GPS-Antenne) zur Positionsbestimmung in einem dreidimensionalen terrestrischen Bezugssystem bekannt, wobei das landwirtschaftliche Fahrzeug oder Arbeitsgerät mit einer Auswerteeinheit (AWE) ausgerüstet ist, die aus den von der Satelliten- Empfangseinheit empfangenen Daten die absolute Position mindestens eines räumlich vom Ort der Satelliten- Empfangseinheit getrennten Referenzpunktes bestimmt. Dabei wird der räumliche Abstand zwischen der Satelliten-Empfangseinheit und dem Referenzpunkt betragsmäßig erfasst. Es sind Sensoren zur Bestimmung der Lage des Fahrzeuges angeordnet, d. h. Ausrichtung und Orientierung des Fahrzeuges in der Horizontalebene des terrestrischen Bezugssystems und/oder der Längs- bzw. Querneigung des Fahrzeuges relativ zur Vertikalrichtung des Bezugssystems. Die Auswerteeinheit besitzt einen Speicher, in dem die genaue Position und Lage des Fahrzeuges abspeicherbar ist. Bei Abweichungen von voreingestellten Sollwerten wird die ermittelte Abweichung entsprechend angezeigt.

Aus der DE 199 14 829 A1 ist ein System und ein Verfahren zur insbesondere graphischen Überwachung und/oder Fernsteuerung von stationären und/oder mobilen Vorrichtungen für Lkw-Auflieger, Baumaschinen, landwirtschaftliche Fahrzeuge, Wechselbrücken und/oder Container bekannt, wo mittels einer Meldevorrichtung von einer Zentrale aus eine Kommunikation über mindestens zwei Kommunikationskanäle zur mobilen Vorrichtung erfolgt. Die mobile Vorrichtung besitzt einen ersten Funktionsblock zur Messwerterfassung, zur Überwachung und/oder zur Alarmabgabe nach vorgebbaren Regeln und einen zweiten Funktionsblock zum Speichern von anwendungsspezifischen Daten der mobilen Vorrichtung.

Das Verhalten der mobilen Vorrichtung wird in der Zentrale visualisiert, die Vorrichtung überwacht und bei Bedarf wird über ein Alarmsystem eingegriffen.

In der DE 199 21 996 A1 wird eine Vorrichtung zum Ausbringen von landwirtschaftlichem Material, wie beispielsweise Düngemittel, Spritzmittel etc., mit Vorratsbehälter und zumindest einer Dosiereinrichtung, von der aus das Material mittels Ausbringorganen in einstellbaren Mengen zugeführt wird, beschrieben. Dort ist eine Steuerungseinrichtung angeordnet, welche ein Speichermedium aufweist, in welchem eine Nährstoff- und/oder Düngekarte oder Feldkarte eingespeichert ist und die mit einem Positionsgeber zum Erzeugen von Feldkoordinatensignalen zur Angabe der relativen Position des Fahrzeuges auf einem Feld versehen ist. Dabei wird die Bewegung über das Feld verfolgt. Die Steuerungseinrichtung besitzt unter anderem einen Betriebsmodus, wo die erste Ausbringfahrt oder Arbeitsfahrt (Zyklus) auf dem Feld gleichzeitig als sogenannte Lernfahrt dient. Dabei werden die einzelnen Betriebsparameter, wie Lage der Fahrgassen, die Arbeitsbreite, Randstreuen, Grenzstreuen und/oder Hindernisse (12) etc., mit ihrer tatsächlichen Position auf dem Feld als Steuer- und/oder Regelgrößen mit Positionsdaten in dem Speichermedium für die folgenden Ausbringfahrten und/oder Arbeitsvorgänge als Steuer- und/oder Regelgrößen abgespeichert.

Aufgabe der Erfindung ist es, ein Verfahren zur Steuerung eines landwirtschaftlichen Nutzfahrzeuges zu schaffen, dass das Fahrmanagement und/oder Feldendemanagement automatisiert, optimiert und sicherer macht, die Bedienung für den Fahrer vereinfacht und Bedienungsfehler durch den Fahrer zuverlässig vermeidet.
Die Aufgabe der Erfindung wird erfindungsgemäß mit den Merkmalen des Patentanspruches 1 gelöst, wobei in den Unteransprüchen Merkmale angeführt sind, die die erfindungsgemäße Lösung in vorteilhafter Weise weiterentwickeln.
Das erfindungsgemäße Verfahren dient insbesondere zur Steuerung der Fahrstrecke und der Fahrweise eines landwirtschaftlichen Nutzfahrzeuges auf nichtöffentlichen landwirtschaftlich genutzten Flächen. Das landwirtschaftliche Nutzfahrzeug ist dabei mit Einrichtungen zur Ermittlung, Speicherung und ansteuerbaren Änderung der Fahrtrichtung, der Fahrgeschwindigkeit, der Motordrehzahl, der Getriebeübersetzung, der Drehzahl jedes einzelnen und/oder aller Antriebsräder und der Betätigung von Zusatzsteuergeräten ausgerüstet. Des weiteren wird die Lage, die Breite, die Bearbeitungsbreite, die Betätigung und die Stellung der angekoppelten Last oder eines angekoppelten Anbaugerätes ermittelt und gespeichert. Das landwirtschaftliche Nutzfahrzeug ist zur Steuerung mit einem satellitengestützten Navigationssystem (GPS), einem Ultraschallgerät, einem Radargerät und Sensoren zur Erfassung und Erkennung von festen und oder beweglichen Hindernissen ausgerüstet. In ihm ist zur Automatisierung des Fahrmanagements im Bedien- und Sichtbereich des Fahrers ein Bordcomputer mit Wechseldatenträger, Bedientableau und Bildschirm einschließlich einer Funkschnittstelle angeordnet. Weiterhin besitzt es zur Geschwindigkeitsregelung mindestens einen Tempomat und Einrichtungen zur Umschaltung auf verschiedene Geschwindigkeitsbereiche. Es sind Anlagen zur automatischen Steuerung der Fahrtrichtung, der Fahrgeschwindigkeit, der Betätigung der Last oder des angekoppelten Anbaugerätes, des Fahrmanagements und der Hubwerkstellung angeordnet. Die einzelnen Fahr- und Steuerungsdaten und Bedienfunktionen können wahlweise sowohl optisch und/oder akustischen angezeigt werden.
Erfindungsgemäß werden mittels der obigen Einrichtungen, Geräte, Sensoren und Anlagen alle Daten zur Fahrstrecke, Fahrweise und Arbeitsweise des landwirtschaftlichen Nutzfahrzeuges einschließlich der angekoppelten Last oder eines angekoppelten Anbaugerätes zeit- und/oder weg-, und/oder positions- und/oder ereignisrelevant gespeichert und ausgewertet und bei Bedarf getaktet angezeigt. Die entsprechend implizierte Software im Bordcomputer erkennt sich wiederholende Fahrmanagements, zeigt diese bei Bedarf getaktet an und speichert alle erforderlichen fahrrelevanten Daten. Deshalb kann dieses Fahrmanagement automatisch oder teilautomatisch wiederholbar ausgeführt werden. Dabei sind die einzelnen Funktion des Fahrmanagements vom Bediener gesamt oder in Fahrblöcken und/oder in getakteten Einzelschritten abruf- und schaltbar. Einzelne Positionen des Fahrmanagements können bei Bedarf durch den Bediener ausgeblendet werden. Aus Sicherheitsgründen ist das Fahrmanagement unabhängig von einer möglichen Auslösung vom Bediener im öffentlichen Verkehrsraum automatisch gesperrt, so dass keinerlei Fehlbedienungen möglich sind. Das landwirtschaftliche Nutzfahrzeug erkennt während der Fahrt über das Fahrmanagement bewegliche oder unvorhergesehene feste Hindernisse (Personen, Tiere, Masten, Steine, Bäume oder andere sonstige Gegenstände) automatisch und'deaktiviert sofort oder zeitverzögert das Fahrmanagement Greift der Bediener nicht ein, bleibt das landwirtschaftliche Nutzfahrzeug stehen. Unabhängig von dieser Situation wird die Aufmerksamkeit des Bedieners ständig überwacht und das Fahrzeug bleibt automatisch stehen, wenn der Bediener nicht reagiert. Solche Überwachungsfunktionen sind in einer Art Totmann- Funktion, wie z. B. in der Eisenbahn üblich, ausführbar. In anderen Ausführungsformen können die Augenbewegungen, die Blickposition oder die Häufigkeit der Augenlidschläge mittels geeigneter Sensoren überwacht werden und daraus Rückschlüsse auf die Aufmerksamkeit des Fahrers gezogen werden. Dadurch lassen sich mögliche Schäden an Personen und der in der Regel sehr teueren Technik des landwirtschaftlichen Nutzfahrzeugs zuverlässig vermeiden.
Bevorzugt wird das erfindungsgemäße Verfahren zur Steuerung eines landwirtschaftlichen Nutzfahrzeuges am Feldende eingesetzt, wo es eine beträchtliche Einsparung an Arbeitszeit und eine Erhöhung der Bedien- und Fahrsicherheit bedeutet. Dabei werden alle Daten zur Fahrstrecke, Fahrweise und Arbeitsweise einschließlich der Geschwindigkeits- und Fahrtrichtungsänderungen und des kompletten Wendevorganges des landwirtschaftlichen Nutzfahrzeuges einschließlich der angekoppelten Last oder eines angekoppelten Anbaugerätes zeit- und/oder weg- und/oder positions- und/oder ereignisrelevant gespeichert und ausgewertet. Sie sind bei Bedarf in Einzelschritten, in Fahrblöcken oder als Ganzes wahlweise anzeigbar, speicherbar und änderbar.
Dadurch werden sich wiederholende Fahrmanagements automatisch am Feldende erkannt und können angezeigt und wiederholt ausgeführt werden. Der Bordcomputer verarbeitet alle Informationen dabei so, dass er auch in einem selbstlernenden Modus automatisch alle Aktionen, die das Feldendemanagement umfassen, erkennt sowie optimieren und automatisch steuern kann. Dabei sind erfindungsgemäß am Feldende die Funktionen des Fahrmanagements vom Bediener gesamt oder in Fahrblöcken und/oder in getakteten Einzelschritten schaltbar und damit auch programmierbar, wobei einzelne Positionen des Fahrmanagements am Feldende bei Bedarf auch ausgeblendet bzw. übersprungen werden können. Das Fahrmanagement im öffentlichen Verkehrsraum ist automatisch gesperrt und kann nicht ausgeblendet oder übersprungen werden.
Durch das GPS System oder das Kamerasystem ist gewährleistet, sobald das Fahrzeug öffentlichen Verkehrsraum erreicht, (z. B. auch lediglich bei Überqueren einer Straße um von einem Feld auf das nächste zu gelangen) dass das landwirtschaftliche Nutzfahrzeug nur auf Steuerungsbefehle des Bedieners reagiert.
Insbesondere am Feldende ist es wichtig, dass das Fahrmanagement beim automatischen Erkennen von Hindernissen sofort oder zeitversetzt automatisch deaktiviert wird, um Schäden zu vermeiden. So ist es programmierbar, dass z. B. bei beweglichen Hindernissen das landwirtschaftliche Nutzfahrzeug sofort stehen bleibt, während es bei festen Hindernissen diese zunächst anzeigt und erst nach einer weiteren Annäherung, falls zwischenzeitlich keine Reaktion des Bedieners erfolgt ist, stehen bleibt. Sinnvoll ist es auch am Feldende die Aufmerksamkeit des Bedieners ständig zu überwachen. Die Bedienungsmöglichkeit eines angeordneten Nottasters zum sofortigen Ausserkraftsetzen des Fahr- und/oder Feldendemanagements ist aus Sicherheitsgründen ebenfalls vorteilhaft.

Auch das Kamerasystem ist so ausgebildet, dass es den Punkt, wo die entsprechenden Aktuatoren des landwirtschaftlichen Nutzfahrzeuges und des Anbauerätes starten, um zum Beispiel das Anbaugerät anzuheben und einen Wendevorgang einzuleiten, automatisch erkennen kann. In einer besonderen Ausführung ist das Kamerasystem auch nachttauglich ausgebildet, d. h. es ist mit Restlichtverstärkern oder Infrarotsensoren ausgestattet. Es können auch weitere Sensoren, wie Entfernungsmesser usw., zusätzlich angeordnet werden, deren Signale ebenfalls mit erfasst und ausgewertet werden.

In einer anderen Ausführungsvariante vor allem bei größeren landwirtschaftlichen Nutzflächen ist es vorteilhaft, wenn das Fahrmanagement für das landwirtschaftliche Nutzfahrzeug in einem nutzfahrzeugunabhängigen Computer mit hoher Rechenkapazität gesondert programmiert wird. Nach Eingabe aller relevanten Daten erfolgt unter Einbeziehung eines entsprechenden Programms auf diesem Computer eine Simulation des geplanten Einsatzes. Dadurch können zum einen Programmierfehler ausgeschlossen werden und zum anderen kann nach mehreren unterschiedlichen Kriterien (z. B. Arbeitszeit, Spritverbrauch, Ernteverluste, Bodenverdichtung usw.) optimiert werden. Das Ergebnis der Simulation wird in das Programm zum Fahr- und oder Feldendemanagement in den Bordcomputer des landwirtschaftlichen Nutzfahrzeuges eingegeben.

Während der ersten und/oder der folgenden Fahrstrecke und Wendemanöver erfolgt dabei ein Abgleich der Daten der programmierten Version mit den aktuellen erfassten Daten. Dies kann dazu führen, dass die programmierten Daten im Bordcomputer erforderlichenfalls korrigiert werden, wobei die Abweichungen und Änderungen angezeigt und gegebenenfalls bestätigt werden.

Diese geänderten aktualisierten Daten werden vom Bordcomputer, der in der Regel nicht eine so hohe Rechenleistung wie der nutzfahrzeugunabhängige Computer hat, über die Funkschnittstelle per Funk oder Telekommunikation in den nutzfahrzeugunabhängigen Computer eingegeben. Dann erfolgt eine erneute Simulation des Fahr- und/oder Feldendemanagements. Diese Ergebnisse werden dann mittels ständigen Datenaustausch an den Bordcomputer des landwirtschaftlichen Nutzfahrzeugs übergeben, welcher das Fahrund/oder Feldendemanagement das landwirtschaftliche Nutzfahrzeugs automatisch optimiert und steuert.

Dadurch wird es erstmals möglich, nach verschiedenen Kriterien in Abhängigkeit von den jeweiligen Einsatz-, Umwelt- und Wetterbedingungen das Fahr- und/oder Feldendemanagement zu optimieren. Die Handhabung durch den Bediener wird vereinfacht, denn er übernimmt in erster Linie eine Überwachungsfunktion. Eventuelle Bedienfehler werden vorher erkannt und können vermieden werden. Schäden an der entsprechenden Technik werden minimiert und die Sicherheit wird insgesamt verbessert.

In einer speziellen Ausführungsform kann das erfindungsgemäße Verfahren zur Steuerung eines landwirtschaftlichen Nutzfahrzeugs so qualifiziert werden, dass in dem nutzfahrzeugunabhängigen Computer über die entsprechende nichtöffentliche landwirtschaftlich genutzte Fläche eine virtuelle zu bearbeitende Fläche gelegt wird. Die virtuelle Fläche entspricht dabei nicht der tatsächlichen äußeren Umrandung der jeweiligen zu bearbeitenden Fläche. Die Grenzen dieser virtuellen Fläche werden in Abhängigkeit von dem eingesetzten landwirtschaftlichen Nutzfahrzeug und seiner angekoppelten Last und/oder Anbaugerät variabel bei der Programmierung festgelegt. Dies ist insbesondere von Vorteil, da oftmals die genauen tatsächlichen Grenzen der Fläche vorher nicht genau bekannt, nicht ermittelbar oder zu ungenau sind.

Dadurch wird beträchtlicher Programmierungsaufwand eingespart. Wichtig ist lediglich die genaue Einnordung oder Nullung der Position und Fahrtrichtung des landwirtschaftlichen Nutzfahrzeuges vor Beginn des Einsatzes des Fahrzeuges vor Ort auf der Nutzfläche mittels entsprechend bekannter Verfahren, z. B. über GPS- gestützte Systeme. Dann erfolgt das Fahr- und/oder Feldendemanagement gemäß den vorher beschriebenen erfindungsgemäßen Verfahren.

In einer weiteren vorteilhaften Ausbildung wird im Verfahren zur Steuerung eines landwirtschaftlichen Nutzfahrzeuges bei der Programmierung anstelle einer virtuellen Fläche in dem nutzfahrzeugunabhängigen Computer und/oder dem Bordcomputer über die entsprechende nichtöffentliche landwirtschaftlich genutzte Fläche eine virtuelles Netzwerk gelegt. Die Netzwerklinien dienen dabei als Grundlage für die Steuerung des Fahrmanagements und/oder Feldendemanagements in Abhängigkeit von dem eingesetzten landwirtschaftlichen Nutzfahrzeug und seiner angekoppelten Last und/oder Anbaugerät. Die äußersten Linien werden gleichzeitig als Sicherheitslinien genutzt, die das landwirtschaftliche Nutzfahrzeug im automatischen Betrieb nicht Überfahren darf. Dies bedeutet eine erhöhte Sicherheit für den Schutz der empfindlichen Technik. Durch die Aufteilung der Fläche in einzelne Netzwerkfelder können auch einzelne Netzwerkfelder oder ganze Netzwerkbereiche definiert werden, wo das automatische Fahrmanagement und/oder Feldendemanagement außer Kraft gesetzt ist oder bei Bedarf Änderungen erfolgen müssen. Solches ist z. B. sinnvoll, wenn sich innerhalb der zu bearbeitenden Fläche Hindernisse, wie ein Gewässer, Steinrücken, Heckenstreifen, einzelne Bäume oder Baumgruppen befinden oder in Hangbereichen die Geschwindigkeit reduziert werden muss oder z. B: bei entsprechender Bodenbeschaffenheit (geringe Bodenkrume, dann darunter sehr steinig) das angekoppelte Bearbeitungsgerät angehoben werden muss. Dieses virtuelle Netzwerk eröffnet erstmals die Möglichkeit, auch bei sehr großflächigen landwirtschaftlichen Nutzflächen, die mit sogenannten Errosionsschutzbepflanzungen unterteilt oder durchsetzt sind, ein ökonomisches Fahrmanagement und/oder Feldendemanagement für die ganze Fläche anzuwenden. Die einzelnen Linien des Netzwerkes können dabei auch gekrümmt verlaufen. Letztendlich ist es durch die Veränderung des Netzwerkrasters kein Problem, die Steuerung entsprechend an die vorgegebenen Bedingungen der landwirtschaftlichen Nutzfläche anzupassen. Geeignete Methoden für die Simulation sind z. B. mit der Finite- Element- Methode rechentechnisch beherrschbar. Weiter innen gelegene Linien im Netzwerk können des weiteren für die automatische Steuerung des Fahrmanagements und/oder Feldendemanagements genutzt werden, indem bei ihrem Überfahren entsprechende Funktionen und/oder Aktionen des landwirtschaftlichen Nutzfahrzeuges einschließlich der angekoppelten Last und oder eines Anbaugerätes ausgelöst werden. Die einzelnen Netzwerkknotenpunkte können bei Bedarf zum jeweiligen Abgleich der Istposition über das GPS benutzt werden, so dass sich das GPS-System nicht ständig in Benutzung befinden muss.

Das Verfahren zur Steuerung eines landwirtschaftlichen Nutzfahrzeuges kann vorteilhaft vervollständigt werden, wenn eine automatische Hindernisserkennung mit einem zusätzlich angeordneten Kamerasystem erfolgt, wobei mindestens eine Kamera Vergleichssignale liefert und diese mindestens mit den Signalen einer anderen Kamera und/oder anderen zusätzlich angeordneten Sensoren überlagert werden und die daraus gewonnenen Informationen sinnvollerweise in einem gesonderten Mikorechnersystem gespeichert und ausgewertet werden. Die bewerteten Informationen aus diesem Überwachungssystem werden so in den Bordcomputer eingegeben, dass dieser die unbeweglichen Hindernisse in seinem Fahrmanagement berücksichtigt. Erkennt das Kamerasystem während der automatischen Fahrt sich bewegende Hindernisse, die sich innerhalb eines einstellbaren und vorher festgelegten Gefahrenraumes befinden, wird das automatische Fahrmanagement gewarnt und gleichzeitig. und/oder zeitversetzt außer Kraft gesetzt. Dies bedeutet, die Maschine würde ohne Eingreifen des Bedieners stehen bleiben. Das Kamerasystem kann ebenfalls die erforderlichen Aktionen (Ansteuerung der Aktuatoren) auslösen, wenn es das Feldende erkannt hat.

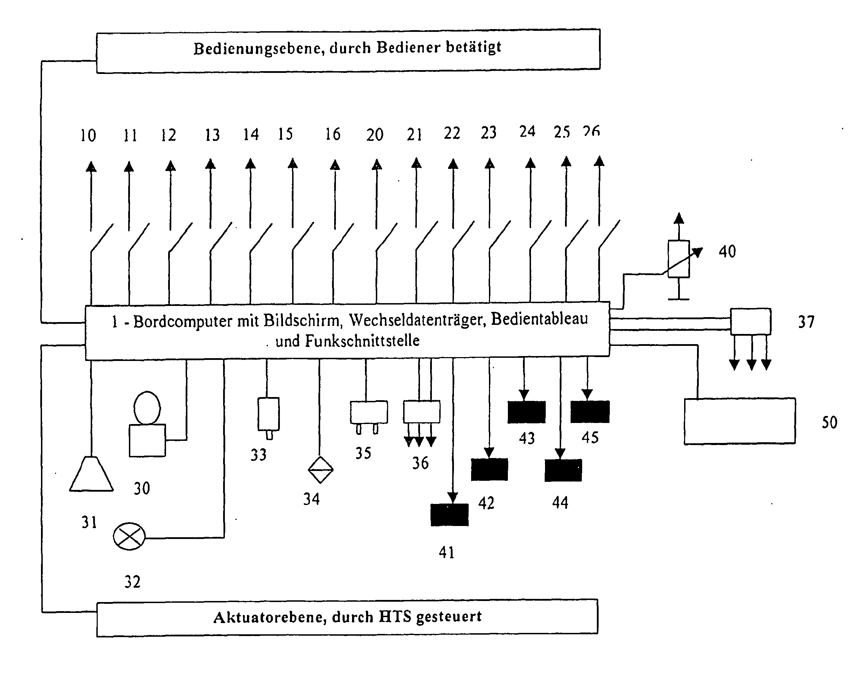

Die Erfindung soll nachstehend in einem Ausführungsbeispiel an Hand der Figur 1 näher erläutert werden. Sie zeigt dabei ein Blockschaltbild mit der Wirkungsweise der erforderlichen Bau- und Bedienelemente zur Durchführung des erfindungsgemäßen Verfahrens, bezogen auf ein Feldendemanagement. Dabei werden bei Erreichen des Wendesektors beim ersten Wendevorgang alle Daten entsprechend der Betätigung von in einer Ebene im Bedienbereich des Bedieners angeordneten Bedienungsschaltern durch den Bediener erfasst und im Bordcomputer 1 gespeichert. Insbesondere werden die Daten zur Fahrstrecke, d. h. der zurückgelegte Weg, die Betätigung der Lenkung, die Fahrweise, d. h. die gefahrene Geschwindigkeit, Geschwindigkeitsänderungen, die Reduzierung der Geschwindigkeit, veränderliche Tempomatwerte, die Drehzahl der Zapfwelle zum Antrieb des angekoppelten Anbaugerätes, die Stellung des Hubwerkes und Arbeitsweise des Anbaugerätes einschließlich der Geschwindigkeits- und Fahrtrichtungsänderungen und des kompletten Wendevorganges des landwirtschaftlichen Nutzfahrzeuges einschließlich der angekoppelten Last oder eines angekoppelten Anbaugerätes zeit- und wegsowie positions- und ereignisrelevant gespeichert und ausgewertet. Die Daten werden in Takten gesammelt und dem Bediener auf dem Bildschirm des Bordcomputers 1 angezeigt. Mittels der HTS -Aufruftaste 10 erfolgt die Aktivierung des HTS- Modus (sogenannter Lernmode) und es wird mit der Aufzeichnung und Abbildung der einzelnen ereignisbezogenen Daten der einzelnen nebeneinander bzw. hintereinander ablaufenden Arbeitstakte begonnen. Durch Betätigung einer entsprechenden HTS- Speichertaste 12 werden die einzelnen Arbeitstakte bei korrekter Ausführung bestätigt und es wird damit Schritt für Schritt der Ablauf des gesamten Feldendemanagements, z. B. eines Wendevorganges am Feldende, gespeichert. Die Taktung der einzelnen Schritte ist veränderbar. Durch die Taktung wird die Menge der Informationen eingeschränkt und durch den Bediener händelbar. Die HTS ON/OFF Taste 11 ermöglicht den HTS- Modus generell oder während des Feldendemanagements bei Bedarf abzuschalten. Um das gespeicherte Feldendemanagement zu überprüfen, wird auch der zweite Wendevorgang am gleichen Feldende in gleicher Taktung und gleicher Art und Weise gespeichert und die einzelnen Schritte werden ebenfalls auf dem Bildschirm des Bordcomputers 1 angezeigt. Der Bediener kann dabei direkt die einzelnen Daten und Schritte vergleichen und Fehler vermeiden bzw. den Wendevorgang gegebenenfalls optimieren. Dieser optimierte Wendevorgang ist dann beliebig oft bei Betätigung der Feldendemanagementtaste 10 (HTS- ON/OFF) automatisch wiederholbar. Da sich aber in der Wirklichkeit über die gesamte Feldbreite gesehen die Wendevorgänge oftmals nur geringfügig unterscheiden, kann der Bediener auch einzelne. Positionen des Fahrmanagements am Feldende bei Bedarf mittels der HTS- Weiterschaltungstaste 13 jeweils nach Ausführung eines Arbeitstaktes den nächsten Arbeitstakt ausblenden bzw. überspringen. Ist das automatische Feldendemanagement eingeschaltet, werden die einzelnen automatisch ablaufenden Arbeitschritte auf dem Bildschirm angezeigt. Der Bediener ist dadurch jederzeit in der Lage, über die entsprechenden Tasten steuernd einzugreifen. Der Bordcomputer 1 ist bei entsprechender Programmierung auch in der Lage, aus mehr als zwei Wendevorgängen einen optimierten Wendevorgang zu ermitteln und diesen bei entsprechender Befehlseingabe in das Feldendemanagement zu integrieren. Dies kann zum Beispiel auch im Stand des Fahrzeuges erfolgen, wenn die erfassten und gespeicherten Daten von zwei Wendevorgängen auf dem Bordcompurter 1 angezeigt werden und über entsprechende Bedientasten eine Auswahl und Durchschalten der einzelnen Arbeitschritte erfolgt. Auch eine automatische Spurerkennung und Spurführung mittels des erfindungsgemäßen Kamerasystems ist ohne Probleme möglich, indem die Spurgassen vorangegangener Fahrten überwacht werden und über die Lenkung die tatsächliche Fahrspur entsprechend korrigiert und angepasst wird.

Von großem Vorteil ist, dass die Funktion des Fahrmanagements und/oder Feldendemanagements am Feldende vom Bediener wahlweise gesamt oder in Fahrblöcken, die aus mehreren einzelnen zusammengefassten Arbeitsschritten bestehen, und/oder in getakteten Einzelschritten schaltbar ist. Im öffentlichen Verkehrsraum, d. h. wenn über das GPS ermittelt wird, dass das landwirtschaftliche Nutzfahrzeug den öffentlichen Verkehrsraum erreicht, wird das Fahrmanagement automatisch gesperrt. Damit dies möglich ist, ist ein entsprechendes übliches GPS-Navigationssystem im Bordcomputer 1 implementiert, das in regelmäßigen Zeitabständen die Ortung über eine GPS Empfangsund Sendeeinheit einschließlich Antenne 30 durchführt. Zur Inbetriebnahme oder Abschaltung dieses Systems ist die Implementierungstaste 15 im Bedienfeld angeordnet. Bevorzugt eignet sich der Zeitpunkt des Erreichens der Knotenpunkte bei Vorliegen eines virtuellen Netzwerkes, das über die gesamte Fläche der landwirtschaftlichen Nutzfläche gelegt worden ist, zur automatischen Standortbestimmung. Zum Erkennen von Hindernissen sind sowohl ein Umfeld- Scanngerät 33, wie z. B. ein Laserscanner, als auch mindestens ein Bewegungsmeldesensor 34 an entsprechend geeigneter Stelle im landwirtschaftlichen Nutzfahrzeug angeordnet. Sinnvollerweise ist der Bewegungsmeldesensor 34 mehrfach an geeigneten Stellen, z. B. an den äußeren Begrenzungen oder Schutzabdeckungen des landwirtschaftlichen Nutzgerätes und an dem Anbaugerät, angeordnet. Diese Signale können über ein spezielles Programm in das Feldmanagement eingekoppelt werden. Bei Überdeckung der Signale wird der Antrieb des Fahrzeugs abgekuppelt und entsprechend kurzzeitig mittels geeigneter Aktuatoren automatisch abgebremst. Für bestimmte geringe Signalpegel ist auch ein zeitversetztes Abbremsen oder nur die Anzeige auf dem Bildschirm und das Absetzen eines akustischen Signals, das z. B. beim Näherkommen die Tonhöhe und die Lautstärke ändert, programmierbar. Die Signalanzeige und oder Auswertung erfolgt über mindestens ein einmal angeordnetes akustisches Signalgerät 31 oder ein optisches Signalgerät 32. Auch die Kopplung der einzelnen Signalsysteme ist möglich. Aus Sicherheitsgründen ist es sinnvoll, dass der Bediener in definierten Zeitabständen eine bestimmte im Bedienbereich angeordnete speziell ausgebildete Totmanntaste 16 drückt. Dadurch wird seine Reaktionsfähigkeit und Aufmerksamkeit überwacht. Wird die Totmanntaste 16 nicht oder nicht innerhalb einer bestimmten Zeit, z. B. nach ihrem Aufleuchten gedrückt, wird das automatische Feldendemanagement außer Kraft gesetzt und das Fahrzeug bleibt stehen und die angekoppelte Last oder das entsprechende Anbaugerät wird ebenfalls abgekoppelt. Heutige landwirtschaftliche Nutzfahrzeuge und ihre Anbaugeräte stellen in der Regel einen hohen finanziellen Wert dar. Deshalb ist es wichtig, dass Fehlfunktionen oder Bedienungsfehler vermieden werden. Diese Totmanntaste 16 kann auch im öffentlichen Verkehrsraum genutzt werden.

Zusätzlich ist dass Nutzfahrzeug über eine Nottaste 14 in kürzester Zeit vom Bediener per Hand abschaltbar. Dabei erfolgt sowohl das Stehenbleiben des Nutzfahrzeuges selbst als auch das Abkuppeln angetriebener Anbaugeräte vom jeweiligen Antrieb. Diese Funktion kann auch variierbar in ihren Wirkungen gestaltet werden. Dazu ist nur die jeweilige Programmierung zu ändern.

Als weitere Bedientasten zur Steuerung des Fahrmanagements sind im Bedienfeld des Bedieners eine Taste zur Steuerung und Einstellung des unteren Wertes des Tempomats 21 und eine Taste zur Steuerung und Einstellung des oberen Wertes des Tempomats 22 angeordnet. Dadurch ist es möglich, die Fahrgeschwindigkeit automatisch zu regeln. Eine weitergehende Optimierung kann mittels der Taste zur Steuerung des Schlupfes 25 und der Taste zur Steuerung des Allradantriebes 26 erreicht werden.

Ebenfalls kann die Steuerung der Anbaugeräte über eine Taste zur Steuerung von Zusatzsteuergeräten 23 erfolgen. Damit lassen sich optimale Einstellungen der Anbaugeräte erzeugen. Mittels der Taste zur Steuerung der Motordrehzahl 20 und der Taste zur Steuerung des Getriebes 24 ist eine verbrauchsoptimierte Steuerung des Fahrmanagements einstellbar.

Am landwirtschaftlichen Nutzfahrzeug ist als weitere Überwachungseinheit eine Kameraempfangs- und Kamerasteuereinheit zur Überwachung von beweglichen und/oder unbeweglichen Hindernissen installiert. Deren Überwachungssignale können ebenfalls gemäß des erfindungsgemäßen Verfahrens in die Steuerung des Feldendemanagements einbezogen werden, indem diese Signale in geeigneter Form zur Anzeige gebracht werden, im Bordcomputer mit entsprechender Priorität Berücksichtigung finden und entsprechende Steuersignale an die einzelnen Aktuatoren des landwirtschaftlichen Nutzfahrzeuges auslösen können.

Die einzelnen Aktuatoren sind über einen Canbus 36, der die Schnittstelle für Signaleingang und Signalausgang zu den einzelnen Geräten und Aktuatoren des landwirtschaftlichen Nutzfahrzeuges bildet, mit dem Bordcomputer 1 verbunden. Als mögliche Aktuatoren sind hier das Zusatzsteuergerät 41, das Getriebe 42, das Schlupfsteuerungsgerät 43, die Differentialsperre 44 und der Allradantrieb angeführt (Verbindung in der Figur 1 nicht gezeichnet). Des weiteren sind aber alle Aktuatoren auch direkt mit dem Bordcomputer 1, z. B. zum Zweck der Überwachung, direkt verbunden.

Gleiches gilt für das Anbaugerät 50 und seine zugehörigen Aktuatoren, das sowohl über einen Isobus 37 und auch direkt mit dem Bordcomputer 1 verbunden ist.

### Liste der verwendeten Bezugszeichen

- 1: Bordcomputer mit Bildschirm, Wechseldatenträger, Bedientableau und Funkschnittstelle
- 10: HTS- Aufruftaste
- 11: HTS ON/OFF
- 12: HTS Speichertaste
- 13: HTS Weiterschaltungstaste
- 14: Nottaste
- 15: Implementierungstaste
- 20: Taste zur Steuerung der Motordrehzahl
- 21: Taste zur Steuerung des unteren Wertes des Tempomats
- 22: Taste zur Steuerung des oberen Wertes des Tempomats
- 23: Taste zur Steuerung von Zusatzsteuergeräten
- 24: Taste zur Steuerung des Getriebes
- 25: Taste zur Steuerung des Schlupfes
- 26: Taste zur Steuerung des Allradantriebes
- 30: GPS Empfangs- und Sendeeinheit einschließlich Antenne
- 31: Akustisches Signalgerät
- 32: Optisches Signalgerät
- 33: Umfeld- Scanngerät
- 34: Bewegungsmeldesensoren
- 35: Kameraempfangs- und Kamerasteuerungseinheit
- 36: Canbus zum Signaleingang und -ausgang zu Geräten und Aktuatoren des landwirtschaftlichen Nutzfahrzeuges
- 37: Isobus zum Signaleingang und -ausgang zur angekoppelten Last oder zu Anbaugeräten und zugehörigen Aktuatoren
- 40: Motor
- 41: Zusatzsteuergerät oder -geräte
- 42: Getriebe
- 43: Schlupfsteuerungsgerät
- 44: Differentialsperre
- 45: Allradantrieb
- 50: Anbaugerät

## Patentansprüche

1. Verfahren zur Steuerung eines landwirtschaftlichen Nutzfahrzeuges, insbesondere der Fahrstrecke und der Fahrweise auf nichtöffentlichen, landwirtschaftlich genutzten Flächen mit Einrichtungen zur Ermittlung, Speicherung und ansteuerbaren Änderung der Fahrtrichtung, der Fahrgeschwindigkeit, der Motordrehzahl, der Getriebeübersetzung, der Drehzahl jedes einzelnen und/oder aller Antriebsräder, der Betätigung von Zusatzsteuergeräten, der Lage, der Breite, der Bearbeitungsbreite, der Betätigung und der Stellung der angekoppelten Last oder eines angekoppelten Anbaugerätes und mit einem satellitengestützten Navigationssystem, einem Ultraschallgerät, einem Radargerät und Sensoren zur Erfassung und Erkennung von festen und oder beweglichen Hindernissen, einem Bordcomputer mit Wechseldatenträger und Funkschnittstelle, Bedientableau und Bildschirm, mindestens einem Tempomat, einer Geschwindigkeitsbereichsumschaltung, Anlagen zur automatischen Steuerung der Fahrtrichtung, der Fahrgeschwindigkeit, der Betätigung der Last oder des angekoppelten Anbaugerätes, des Fahrmanagements, der Hubwerkstellung und der optischen und/oder akustischen Anzeige von Bedienungssituationen,
**dadurch gekennzeichnet,**
a) **dass** alle Daten zur Fahrstrecke, Fahrweise und Arbeitsweise des landwirtschaftlichen Nutzfahrzeuges einschließlich der angekoppelten Last oder eines angekoppelten Anbaugerätes zeit- und/oder weg- und/oder positions- und/oder ereignisrelevant gespeichert und ausgewertet und bei Bedarf getaktet angezeigt werden,
b) **dass** sich wiederholende Fahrmanagements automatisch erkannt und/oder bei Bedarf getaktet angezeigt und wiederholbar ausgeführt werden,
c) **dass** die Funktionen des Fahrmanagements vom Bediener gesamt oder in Fahrblöcken und/oder in getakteten Einzelschritten schaltbar sind, wobei einzelne Positionen des Fahrmanagements bei Bedarf ausgeblendet werden können,
d) **dass** das Fahrmanagement im öffentlichen Verkehrsraum automatisch gesperrt ist,
e) **dass** das Fahrmanagement bei Hindernissen automatisch deaktiviert wird, wobei die Aufmerksamkeit des Bedieners überwacht wird und das Fahrzeug automatisch stehen bleibt, wenn der Bediener nicht reagiert.

2. Verfahren zur Steuerung eines landwirtschaftlichen Nutzfahrzeuges, nach Anspruch 1,
**dadurch gekennzeichnet,**
a) **dass** am Feldende alle Daten zur Fahrstrecke, Fahrweise und Arbeitsweise einschließlich der Geschwindigkeits- und Fahrtrichtungsänderungen und des kompletten Wendevorganges des landwirtschaftlichen Nutzfahrzeuges einschließlich der angekoppelten Last oder eines angekoppelten Anbaugerätes zeit- und/oder weg- und/oder positions- und/oder ereignisrelevant gespeichert und ausgewertet und bei Bedarf angezeigt werden,
b) **dass** sich wiederholende Fahrmanagements am Feldende automatisch erkannt und/oder angezeigt und wiederholt ausgeführt werden,
c) **dass** die Funktion des Fahrmanagements am Feldende vom Bediener gesamt oder in Fahrblöcken und/oder in getakteten Einzelschritten schaltbar ist, wobei einzelne Positionen des Fahrmanagements am Feldende bei Bedarf ausgeblendet bzw. übersprungen werden können,
d) **dass** das Fahrmanagement im öffentlichen Verkehrsraum automatisch gesperrt ist,
e) **dass** das Fahrmanagement bei Hindernissen sofort oder zeitversetzt automatisch deaktiviert wird, die Hindernisse angezeigt oder anderweitig darüber der Bediener informiert wird,
f) wobei die Aufmerksamkeit des Bedieners überwacht wird und das Fahrzeug automatisch stehen bleibt, wenn der Bediener nicht reagiert,
g) und **dass** Fahrmanagement über eine Nottaste deaktivierbar ist.

3. Verfahren zur Steuerung eines landwirtschaftlichen Nutzfahrzeuges, nach Anspruch 1 und 2,
**dadurch gekennzeichnet,**
a) **dass** das Fahrmanagement in einem nutzfahrzeugunabhängigen Computer gesondert programmiert wird,
b) auf diesem Computer eine Simulation erfolgt, das Ergebnis der Simulation in das Programm einfließt und dieses Programm zum Fahr- und/oder Feldendemanagement in den Bordcomputer des landwirtschaftlichen Nutzfahrzeuges eingegeben wird,
c) ein Abgleich der Daten der programmierten Version mit den aktuellen Daten während der ersten und/oder der folgenden Fahrstrecke und Wendemanöver erfolgt, die Daten erforderlichenfalls korrigiert und die Abweichungen und Änderungen angezeigt werden,
d) die geänderten aktualisierten Daten über die Funkschnittstelle in den nutzfahrzeugunabhängigen Computer eingegeben werden, dabei die Simulation erneut erfolgt
e) und mittels ständigen Datenaustausch das Fahr- und/oder Feldendemanagement das landwirtschaftliche Nutzfahrzeug automatisch optimiert und gesteuert wird.

4. Verfahren zur Steuerung eines landwirtschaftlichen Nutzfahrzeuges, nach Anspruch 3,
**dadurch gekennzeichnet,**
a) **dass** in dem nutzfahrzeugunabhängigen Computer über die entsprechende nichtöffentliche landwirtschaftlich genutzte Fläche eine virtuelle zu bearbeitende Fläche gelegt wird
b) und die Grenzen dieser virtuellen Fläche in Abhängigkeit von dem eingesetzten landwirtschaftlichen Nutzfahrzeug und seiner angekoppelten Last und/oder Anbaugerät variabel änderbar sind.

5. Verfahren zur Steuerung eines landwirtschaftlichen Nutzfahrzeuges, nach Anspruch 4,
**dadurch gekennzeichnet,**
a) **dass** in dem nutzfahrzeugunabhängigen Computer und/oder dem Bordcomputer über die entsprechende nichtöffentliche landwirtschaftlich genutzte Fläche ein virtuelles Netzwerk gelegt wird,
b) die Netzwerklinien und/oder Knotenpunkte des Netzwerkes als Grundlage für die Steuerung des Fahrmanagements und/oder Feldendemanagements in Abhängigkeit von dem eingesetzten landwirtschaftlichen Nutzfahrzeug und seiner angekoppelten Last und/oder Anbaugerät dienen,
c) die äußersten Linien gleichzeitig als Sicherheitslinien genutzt werden, die das Fahrzeug im automatischen Betrieb nicht überfahren darf
d) und weiter innen gelegene Linien und/oder Knotenpunkte für die automatische Steuerung des Fahrmanagements und/oder Feldendemanagements dienen,
e) indem bei ihrem Überfahren entsprechende Funktionen und/oder Aktionen des landwirtschaftlichen Nutzfahrzeuges einschließlich der angekoppelten Last und/oder eines Anbaugerätes ausgelöst werden.

6. Verfahren zur Steuerung eines landwirtschaftlichen Nutzfahrzeuges, nach Anspruch 2,
**dadurch gekennzeichnet,**
a) **dass** die Hindernis- und Feldendeerkennung mit einem Kamerasystem erfolgt,
b) wobei mindestens eine Kamera Vergleichssignale liefert und diese mindestens mit den Signalen einer anderen Kamera und/oder von anderen Sensoren überlagert werden und die daraus gewonnenen Informationen in einem gesonderten Mikorechnersystem gespeichert und ausgewertet werden und
c) die bewerteten Informationen in den Bordcomputer eingegeben werden, dieser die unbeweglichen Hindernisse in seinem Fahrmanagement berücksichtigt,
d) während bei sich bewegenden Hindernissen, die sich innerhalb eines festgelegten Gefahrenraumes befinden, das automatische Fahnnanagement den Bediener warnt und das automatische Fahrmanagement gleichzeitig und/oder zeitversetzt außer Kraft gesetzt wird.

## Claims

1. Method for controlling an agricultural vehicle, particularly the route and method of operation on private agricultural land, with facilities for determining, saving and actuatably changing the direction of travel, the speed, the engine rpm, the gear transmission ratio, the rpm of each individual and/or all the driving wheels, the operation of supplementary units, the position, the width, the working width, the operation and position of the coupled load or a coupled implement, and with a satellite-assisted navigation system, an ultrasonic unit, a radar unit and sensors to acquire and detect stationary and/or mobile obstacles, a vehicular computer with removable data medium and wireless interface, an operating panel and monitor, at least one speed limiter, a speed range changeover system, systems for automatic control of the direction of travel, speed operation of the load or a coupled implement, the driving management system, the lifting gear position and the visual and/or acoustic display of operating situations,
**characterised in that**
a) all the data on the route, driving mode and method of operation of the agricultural vehicle, including the coupled load or a coupled implement, are saved by time and/or distance and/or item and/or event, analysed and displayed in a cycle if required;
b) repeated driving management events are detected automatically and/or displayed and implemented repeatably;
c) the driving management functions are switchable by the operator, as a whole, in groups and/or in cyclical single stages, whereby individual driving management items can be hidden or omitted if required;
d) the driving management system is automatically isolated on the public highway;
e) and the driving management system is automatically deactivated if obstacles are encountered, the driver's attention being monitored constantly and the vehicle coming to a standstill automatically if the operator fails to react.

2. Method for controlling an agricultural vehicle according to claim 1,
**characterised in that**
a) when the headland is reached, all the data on the route, driving mode and method of operation, including changes of direction and speed and the complete turning sequence of the agricultural vehicle including the coupled load or a coupled implement, are saved by time and/or distance and/or item and/or event, analysed and displayed if required;
b) repeated driving management events are detected automatically on the headland and/or displayed and implemented repeatedly;
c) the driving management functions on the headland is switchable by the operator, as a whole, in groups and/or in cyclical single stages, whereby individual driving management items on the headland can be hidden or omitted if required;
d) the driving management system is automatically isolated on the public highway;
e) the driving management system is automatically deactivated immediately or by delayed action if obstacles are encountered, the obstacles displayed or the operator informed of them in another way;
f) the driver's attention being monitored constantly and the vehicle coming to a standstill automatically if the operator fails to react;
g) and the driving management system can be deactivated by an emergency stop button.

3. Method for controlling an agricultural vehicle according to claim 1 and 2, **characterised in that**
a) the driving management system for the agricultural vehicle is programmed separately on a computer independent of the vehicle;
b) simulation takes place on this computer, the results of simulation are loaded into the program and said driving management and/or HTS program is loaded on to the vehicular computer of the agricultural vehicle;
c) the data from the programmed version is reconciled with the current data during the first and/or second run and the turning manoeuvre, corrected if necessary, and deviations and changes displayed;
d) the modified, updated data are entered into the computer independent of the vehicle through the wireless interface, simulation taking place again;
e) and the driving management system and/or the HTS of the agricultural vehicle are automatically optimised and controlled by means of a constant exchange of data.

4. Method for controlling an agricultural vehicle according to claim 3,
**characterised in that**
a) a virtual working area is superimposed on the corresponding private agricultural area on the computer independently of the agricultural vehicle;
b) and the boundaries of said virtual area can be varied as a function of the agricultural vehicle used and its coupled load.

5. Method for controlling an agricultural vehicle according to claim 4
**characterised in that**
a) a virtual grid is superimposed on the corresponding private agricultural area during programming on the computer independent of the vehicle and/or the vehicular computer;
b) the gridlines and/or their intersections are used as a basis for control of the driving management system and/or HTS as a function of the agricultural vehicle used and/or its coupled load and/or implement;
c) the outermost lines are simultaneously used as safety lines, which the agricultural vehicle may not cross in automatic mode;
d) and, in addition, further internal gridlines can be used for automatic control of the driving management system and/or the HTS;
e) by corresponding functions of and/or actions by the agricultural vehicle, including the coupled load and/or an implement being triggered if they are crossed.

6. Method for controlling an agricultural vehicle according to claim 5
**characterised in that**
a) obstacle and headland detection is by means of a camera system;
b) in which at least one camera provides signals for comparison on which the signals from another camera and/or other additional sensors can be superimposed, and the information thus obtained saved and analysed in a separate microcomputer system, and
c) the analysed information from this monitoring system is entered into the vehicular computer so that it makes allowance for immovable obstacles in the driving management system;
d) whilst if the camera system detects moving obstacles located within an adjustable danger area specified in advance, during automatic travel, the driving management system is warned and suspended, either simultaneously or by delayed action

## Revendications

1. Procédé pour la commande d'un véhicule utilitaire agricole, en particulier du parcours et du mode de conduite sur des surfaces non publiques utilisées à des fins agricoles, avec des dispositifs pour la détermination, la mémorisation et la modification réglable du sens de marche, de la vitesse de marche, du nombre de tours du moteur, du rapport de transmission, de la vitesse de rotation de chaque roue motrice séparément et/ou de toutes les roues motrices, l'actionnement de dispositifs supplémentaires, de la position, de la largeur, de la largeur de travail, de l'actionnement et de l'emplacement de la charge attelée ou d'un équipement auxiliaire attelé et avec un système de navigation par satellite, un dispositif ultra-sonore, un radar et des capteurs pour la saisie et la détection d'obstacles fixes et/ou mobiles, un ordinateur de bord avec support de données bidirectionnelles et interface radio, panneau de commande et écran, au moins un tempomat, une commutation du domaine de vitesses, des dispositifs pour la commande automatique du sens de marche, de la vitesse de marche, de l'actionnement de la charge ou de l'équipement auxiliaire attelé, de la gestion de marche, de la position du relevage et de la communication optique et/ou acoustique de situations de commande,
**caractérisé en ce que** :
a) toutes les données relatives au parcours, au mode de conduite et au mode de travail du véhicule utilitaire agricole, y compris de la charge attelée ou d'un équipement auxiliaire attelé sont mémorisées et exploitées en fonction du temps et/ou du trajet et/ou de la position et/ou des événements et peuvent être affichées de manière séquencée en cas de.besoin,
b) les gestions de marche qui se répètent sont détectées automatiquement et/ou sont communiquées de manière séquencée en cas de besoin et peuvent être exécutées de manière répétée,
c) les fonctions de la gestion de marche sont commutables par l'opérateur en totalité ou selon des blocs de marche et/ou en étapes individuelles séquencées, différentes positions de la gestion de marche pouvant être supprimées en cas de besoin,
d) la gestion de marche est bloquée automatiquement dans l'espace réservé à la circulation publique,
e) la gestion de marche est désactivée automatiquement en cas d'obstacles, la capacité d'attention de l'opérateur étant surveillé et le véhicule restant automatiquement immobile si l'opérateur ne réagit pas.

2. Procédé pour la commande d'un véhicule utilitaire agricole, suivant la revendication 1, **caractérisé en ce que**:
a) à la fourrière, toutes les données relatives au parcours, au mode de conduite et au mode de travail, y compris les modifications de la vitesse et du sens de marche, et le demi-tour complet du véhicule utilitaire agricole, notamment de la charge attelée ou d'un équipement auxiliaire attelé sont mémorisées et exploitées en fonction du temps et/ou du trajet et/ou de la position et/ou de l'événement, et communiquées en cas de besoin,
b) des gestions de marche qui se répètent sont détectées et/ou communiquées automatiquement et exécutées de manière répétée,
c) la fonction de la gestion de marche est commutable à la fourrière par l'opérateur dans sa totalité ou en blocs de marche et/ou en étapes individuelles séquencées, différentes positions de la gestion de marche à la fourrière pouvant être supprimées ou sautées en cas de besoin,
d) la gestion de marche est bloquée automatiquement dans l'espace réservé à la circulation publique,
e) la gestion de marche est automatiquement désactivée immédiatement ou avec temporisation en cas d'obstacles, les obstacles étant affichées ou l'opérateur en étant informé d'une autre manière,
f) la capacité d'attention de l'opérateur est surveillée et le véhicule reste immobilisé automatiquement si l'opérateur ne réagit pas et
g) que la gestion de marche est désactivable par le biais d'une touche d'arrêt d'urgence.

3. Procédé pour la commande d'un véhicule utilitaire agricole, suivant les revendications 1 et 2,
**caractérisé en ce que**:
a) la gestion de marche est programmée séparément dans un ordinateur indépendant du véhicule utilitaire,
b) une simulation a lieu sur cet ordinateur, le résultat de la simulation est introduit dans le programme et ce programme est introduit pour la gestion de marche et/ou de la fourrière dans l'ordinateur de bord du véhicule utilitaire agricole,
c) une compensation des données de la version programmée avec les données actuelles a lieu pendant le premier parcours et/ou les parcours suivants et la manoeuvre de demi-tour, les données étant corrigées le cas échéant et les écarts ainsi que les modifications étant affichés,
d) les données actualisées modifiées sont introduites via l'interface radio dans l'ordinateur indépendant du véhicule utilitaire, la simulation étant renouvelée
e) et la gestion de marche et/ou de fourrière optimisent et commandent automatiquement le véhicule utilitaire agricole au moyen d'un échange constant de données.

4. Procédé pour la commande d'un véhicule utilitaire agricole suivant la revendication 3, **caractérisé en ce que** :
a) une surface virtuelle à traiter est placée dans l'ordinateur indépendant du véhicule utilitaire via la surface non publique correspondante utilisée à des fins agricoles.
b) et les limites de cette surface virtuelle sont modifiables de manière variable en fonction du véhicule utilitaire agricole mis en oeuvre et de sa charge et/ou de son équipement auxiliaire attelé(e).

5. Procédé pour la commande d'un véhicule utilitaire agricole suivant la revendication 4, **caractérisé en ce que**
a) dans l'ordinateur indépendant du véhicule utilitaire et/ou l'ordinateur de bord, un réseau virtuel est placé au-dessus de la surface non publique correspondante utilisée à des fins agricoles,
b) les lignes de réseau et/ou les noeuds du réseau servent de base pour la commande de la gestion de marche et/ou de la gestion de fourrière en fonction du véhicule utilitaire agricole mis en oeuvre et de sa charge et/ou de son équipement auxiliaire attelé(e),
c) les lignes extérieures sont utilisées simultanément comme lignes de sécurité que le véhicule ne peut pas dépasser en mode automatique
d) et que des lignes et/ou des noeuds disposés plus à l'intérieur servent à la commande automatique de la gestion de marche et/ou de la gestion de fourrière ;
e) en cas de dépassement (de ces lignes), des fonctions et/ou des actions correspondantes du véhicule utilitaire agricole, y compris de la charge et/ou d'un équipement auxiliaire attelé(e) sont déclenchées.

6. Procédé pour la commande d'un véhicule utilitaire agricole suivant la revendication 2, **caractérisé en ce que** :
a) la détection des obstacles et de la fourrière a lieu à l'aide d'un système de caméra,
b) au moins une caméra émet des signaux comparatifs et ceux-ci sont recouverts par au moins les signaux d'une autre caméra et/ou d'autres capteurs, les informations obtenues étant mémorisées et évaluées dans un système de microprocesseur distinct et
c) les informations exploitées sont introduites dans l'ordinateur de bord, celui-ci tenant compte desdits obstacles immobiles dans sa gestion de marche,
d) alors que pour des obstacles mobiles qui se trouvent à l'intérieur d'une zone de danger définie, la gestion automatique de marche avertit l'opérateur, la gestion automatique de marche est étant hors service en même temps et/ou avec temporisation.
